# EUROPEAN PATENT SPECIFICATION

(11) **EP 1 587 360 B1**
(45) Date of publication and mention of the grant of the patent: **11.04.2007**
(21) Application number: 04703958.1
(22) Date of filing: 21.01.2004
(51) Int. Cl.: A01K 1/00, B08B 3/02

(54) **CLEANING DEVICE**
REINIGUNGSVORRICHTUNG
DISPOSITIF DE NETTOYAGE

(30) Priority: 23.01.2003 SE 0300184
(43) Date of publication of application: 26.10.2005
(73) Proprietor: Sandberg, Jan, 755 91 Uppsala (SE); Asplund, Lars, 724 64 Västeras (SE)
(72) Inventor: Sandberg, Jan, 755 91 Uppsala (SE); Asplund, Lars, 724 64 Västeras (SE)
(74) Representative: Fröderberg, Anders Oskar
(86) International application number: PCT/SE2004/000065
(87) International publication number: WO 2004/064504

(56) References cited:
- WO-A2-02/060606
- SE-C2- 518 392
- US-A1- 2003 005 531

## Description

### Technical field

The present invention regards an automatic cleaning device for animal stalls including a sound-controlled shut-off device and a process for shutting off an automatic cleaning device by analysis of sound signals generated by the cleaning process.

### Prior art

Cleaning of animal stalls may represent a considerable problem. The stalls must be cleaned a certain number of times each year, and packed manure forms a hard layer which is difficult to remove. The process is well suited for automatic systems, firstly as it is physically taxing and time-consuming, and secondly as the substances which are produced during the cleaning process in the form of gases and fog are injurious to the health.

Existing automatic cleaning devices for animal stalls do not include an automatic shut-off device. This means that the cleaning devices cannot be used in an optimal way, as they cannot be regulated to shut off when a predetermined degree of cleanness has been reached. As a consequence, the result is in most cases either over-cleaning, that is more cleaning cycles or longer cleaning times per area unit than is needed to obtain the desired degree of cleanness, or under-cleaning, that is a degree of cleanness that means that the automatic cleaning must be supplemented by a manual cleaning step.

### Purpose of the invention

The purpose of the present invention is to provide an automatic cleaning device for animal stalls, the cleaning device being equipped with a sound-controlled shut-off device, and a process for sound-controlled shutting-off of an automatic cleaning device for animal stalls, the sound control comprising an analysis of the sounds generated in the cleaning process, a comparison with a threshold value and shutting off at a given result from the comparison.

### Drawings

Figure 1 shows a flow chart with a schematic rendering of the steps of the sound-controlled shutting-off according to the invention.
Figure 2 shows the cleaning robot in the embodiment which is described below.

### Detailed description of the invention

The function of the sound-controlled shut-off device according to the invention is based on the fact that the characteristics of sounds generated at a surface which is being cleaned, that is an area from which dirt is removed by a high-pressure jet of cleaning fluid or by ultrasound, differ depending on the nature of the surface. If the surface is dirty, the sounds generated by the cleaning will change towards an asymptotic value as the dirt is removed from the surface and as the change of the nature of the surface per time unit accordingly slows down gradually.

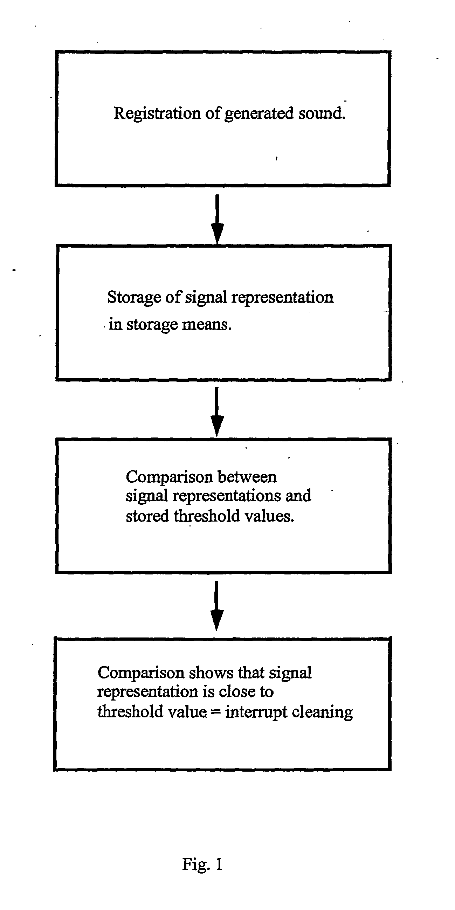

An automatic cleaning device for animal stalls according to the present invention is comprised partly by elements necessary for the automatication of the cleaning device, such as driving means, cleaning means and a control unit, partly by an automatically controlled shut-off device, the function of which is shown in Figure 1, which comprises sound-registering means which register signals generated at a surface being cleaned, storage means for storage of the registered signals and comparison means for the execution of a comparison between said stored signals and pre-registered data. These latter may represent a threshold value for signals generated at a surface being cleaned which has the desired degree of cleanness

The sound-registering means according to the invention may be intended either for the registration of signals from a high-pressure jet of a cleaning fluid or of ultrasound signals, if ultrasound is used for the cleaning. In addition to the sounds generated by a high-pressure jet or ultrasound, it would also be possible to use a specific transmitted probe signal which hits the surface and generates sounds which can be registered by the sound-registration device. The sound signals generated at the surface being cleaned may be registered continuously or at previously determined time intervals. The sound-registering device may consist of a device which is independent from the cleaning device, which means that it can be positioned so as to give an optimal result of the sound-registering. It can also be built into either the main body of the cleaning device or into an optional cleaning arm. The sound-registering device may also be equipped with suitable shielding to minimize noise from the environment.

The storage means for storage of signals generated at a surface being cleaned may store signals continuously or with a given frequency, where storage at a given frequency gives signal values for a predetermined number of sampling points. The signals may be stored in the storage means in the form of any representation of the wavelength, the amplitude or the frequency of the sound, depending on what is most suitable for the specific application. Said storage means may also be used to store the registered threshold values, but this is not necessary, as the threshold values may be stored in an external memory bank which may be connected to said storage means. This might be preferable if the intention is to add more values as better data become available for various materials and for other parameters.

The means for comparison of the stored signals and the pre-registered signals, which represent a threshold value for signals generated from a surface being cleaned, may be either external or built into the cleaning device itself. In the cleaning robot according to the preferred embodiment described below, they may for example also be combined with the control unit of the cleaning robot. In their most basic embodiment, the means for comparison include software which may be based on one of the following principles:
1. During cleaning with for instance a cleaning robot or during manual cleaning, instructions are given to the system regarding the degree of cleanness. This signal is used for the correlation of the characteristics of the sound to the degree of cleanness.
2. A cleaning robot in operation continuously registers the sound which is generated by the cleaning, and as a clean surface should give rise to sounds of a given class (and at over-cleaning give an asymptotic value for the measured sound), an automatic classification can be made by the system. The same principle may be used for signals separated by a predetermined time interval, which may be useful for reducing the number of operations in the comparison process.
3. Through determination of the characteristics of various materials, a model may be created of the sound generated from the jet. From this model, the most relevant characteristics of the measurement can be determined.
4. Combinations of the above. It would for example be possible to use a model calibrated in the field to choose relevant parts of the sound signal which may then be used for an automatic classification.

Depending on the desired degree of cleanness, data from continuous registering or sampling points may be treated in the following manner:
a) the registered continuous signal, or all sampling points of the signal, should be close to a given threshold value which is regarded as representative for a surface with a desired degree of cleanness,
   or
b) a given proportion of the total time span of the registered continous signal or a given proportion of the sampling points should be close to a given threshold value, where this value again is regarded as representative for a surface with a desired degree of cleanness.

In addition, the segmentation of the surface to be cleaned may be varied in different ways in combination with the principles for the determination of degree of cleanness according to a) and b) above. As a consequence of this, a uniform treatment of a large surface results in over-cleaning/under-cleaning of parts of the surface. If for instance the walls are dirtiest in the middle area, while being cleaner in the upper areas, a uniform operation of the system, that is, the cleaning device is not shut off until all signals received from the wall are close to the threshold value, some parts of the wall would be over-cleaned. This would in itself be acceptable in certain cases, but the problem has several solutions. It would for example be possible to co-ordinate the sound-controlled shut-off device with the operating schedule for the cleaning device, for instance so that the cleaning device is instructed not to release any cleaning fluid on the wall areas which give signals close to the threshold value until all signals received from the surface being cleaned are close to the threshold value. Another possibility would be to accept a certain degree of under-cleaning. The system could for example be arranged so that the cleaning device is shut off when a given proportion of the received signals are close to the threshold value. In case a discrete registration of sound signals is used, this means that the cleaning device is shut off when a given percentage of the received signals are close to the threshold value. Also in the case of under-cleaning, the system could be co-ordinated with the operating schedule of the cleaning device, so that the cleaning device does not release any cleaning fluid on the areas which are already generating sound signals which are close to the threshold value.

A large number of variants and combinations exist for the choice of cleaning program, registration and storage of signals and threshold values for shutting off of the cleaning process, and these are all regarded as being within the scope of the invention according to the enclosed claims.

### Embodiment of a cleaning device with a sound-controlled shut-off device

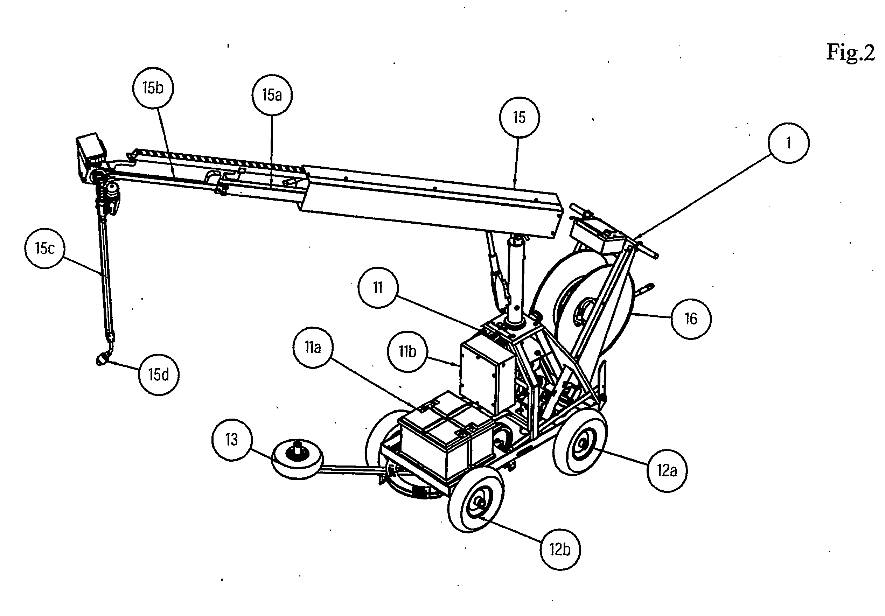

In one embodiment, the automatic cleaning device is a cleaning robot as shown in Figure 2, which is disclosed in the Swedish patent application 9804508-1. For the sake of clarity, this automatic cleaning device will be described in short below, using its features. The intended cleaning robot comprises a chassi (11), two pairs of wheels (12a, 12b), of which at least one pair is driven by a driving device which is connected to this pair or these pairs of wheels, a nozzle part (15d), onto which a nozzle is attached which can be turned off, intended for cleaning fluid at high pressure, and which further comprises a cleaning arm (15) which has at least three arm parts (15a, 15b, 15c), of which a first inner arm part (15a) is articulately and movably joined to the chassi (11), a second, middle arm part (15b) is joined in one end to the first inner arm part (15a) and in the other end to an outer third arm part (15c), the nozzle part (15d) being movably arranged on the outer third arm part (15c) and the arm parts being connected to one another by joint elements, all of the arm parts being equipped with organs registering position or movement for the determination of the position of the arm parts in relation to each other as a function of time, and which are further equipped with driving means to move the arm parts in relation to each other, the nozzle being connected to a conduit for the supply of cleaning fluid, the device further being equipped with a programmable control unit (11b) which has entries for the reception of signals from the means for the registration of position and/or movement and means for the detection of the parking positions which are connected to these entries, a memory for storage of these signals in the form of a software program and outputs for sending these control signals to the means of the device for driving of driving wheels and of driving means for the function and movement of the cleaning arm (15), the control unit (11b) being capable of controlling the function of the device according to a preprogrammed movement pattern, the control unit being capable of controlling the movement of the driving wheels as well as the cleaning arm (15) and the nozzle part (15d) and of opening and closing the nozzle.

In this example, a preferred robot according to the preferred embodiment as above is used, with application of learning principle 1 as above. As was mentioned earlier, alternative principles can be used.

In the first step of the programming, the cleaning robot is placed in a parking position in which it reaches a first space for cleaning. In the second step, those surfaces are cleaned which are to be cleaned by manual control of the cleaning robot. The third step implies repetition of the first and second step until all spaces to be cleaned on the premises have been cleaned by the cleaning robot. The cleaning robot is programmed with the movements which are used during the steps above, using signals which are representative for these movements and which are provided to a control unit through registration of the movements performed by means for this purpose in the robot. The steps are stored in a memory which is provided in a control unit of the cleaning robot. At the next cleaning of the same space, the contents of this memory are used by the control unit as a program for automatic control of the cleaning robot. The programming can be performed by manual operation of the cleaning robot with a handheld manoeuvering unit intended for this purpose, with the registered signals being transferred directly to the control unit. The program can also be subsequently corrected using a computer connected to the control unit, with an operator going through the program step-by-step to perform the necessary corrections.

The sound-controlled shut-off device of the cleaning robot may be based for instance on a comparison between the sound generated during cleaning at the surface to be cleaned and representative threshold values which have previously been stored in the means of comparison. Another possibility is to register the threshold values for the sound-controlled shut-off device during a manually performed cleaning operation, using a joystick or some other kind of controlling device, the sound signals generated during cleaning at the surface to be cleaned being registered by the sound-registering device and stored as threshold values when the operator finds that the desired degree of cleanness has been reached.

In one process exemple of the sound-controlled shut-off system for a cleaning device for animal stalls, the cleaning device as described above performs the cleaning process and the sound-registering system of this cleaning device continually registers the signals generated from the surface being cleaned. The cleaning device will continue through the stored procedure until the signals registered from the surface being cleaned are perceived by the comparison means as being sufficiently close to the registered threshold value. A command will then be sent through a connection between the sound-controlled shut-off device and the cleaning device that the cleaning device should interrupt the cleaning process. This means that the cleaning device will place itself in a new parking position at the next space to be cleaned and start a new cleaning process. The cleaning process with sound-controlled shut-off will then continue until all spaces have been cleaned. In this example, the signals may also be registered with an alternative process using discrete sound-registering.

## Claims

1. An automatic cleaning device performing a previously registered pattern of movement during cleaning of animal stalls, said cleaning device being equipped with a sound-controlled shut-off device comprising a sound-registering device arranged to register signals generated at a surface being cleaned, storage means for storage of said signals and means to perform a comparison process between said stored signals and previously stored data representing a threshold value for signals generated from a surface having the desired degree of cleanness.

2. A process in which a comparison process is used for automatic shutting off of an automatic cleaning device which performs a previously registered pattern of movements during cleaning of animal stalls, said process being **characterized by** the registration by a sound-registering device of sound signals being generated at the surface being cleaned, said signals being stored in storage means and a comparison process being made between said stored sound signals and a predetermined threshold value, said cleaning device being turned off when the result of said comparison process indicates that said sound signal corresponds to said threshold value.

3. A process according to claim 2, **characterized in that** the sound-registering device registers the generated sound signals continuously.

4. A process according to claim 2, **characterized in that** the sound-registering device registers the sound signals generated at the surface being cleaned at predetermined time intervals.

5. A process according to claims 2, 3 or 4, **characterized in that** the comparison process is performed on signals which are separated by a predetermined time interval.

## Patentansprüche

1. Automatische Reinigungsvorrichtung, die während des Reinigens von Tierställen ein vorher registriertes Bewegungsmuster durchführt, wobei die Reinigungsvorrichtung ausgestattet ist mit einer geräuschgesteuerten Abschaltvorrichtung, umfassend eine geräuschregistrierende Vorrichtung, um auf einer Oberfläche, die gereinigt wird, erzeugte Signale zu registrieren, eine Speichereinrichtung zum Speichern dieser Signale und eine Einrichtung zur Durchführung eines Vergleichsverfahrens zwischen den gespeicherten Signalen und den vorher gespeicherten Daten, die einen Schwellenwert für von einer Oberfläche, die den gewünschten Reinheitsgrad aufweist, erzeugten Signalen repräsentieren.

2. Verfahren, in dem ein Vergleichsverfahren verwendet wird, um eine automatische Reinigungsvorrichtung automatisch abzuschalten, die während des Reinigens von Tierställen ein vorher registriertes Bewegungsmuster durchführt, wobei das Verfahren charakterisiert ist durch die Registrierung, mittels einer geräuschregistrierenden Vorrichtung, von Geräuschsignalen, die an der Oberfläche, die gereinigt wird, erzeugt werden, wobei diese Signale in einer Speichereinrichtung gespeichert werden, und ein Vergleichsverfahren zwischen den gespeicherten Geräuschsignalen und einem vorher bestimmten Schwellenwert durchgeführt wird, und die Reinigungsvorrichtung abgeschaltet wird, wenn das Ergebnis dieses Vergleichsverfahrens anzeigt, dass das Geräuschsignal dem Schwellenwert entspricht.

3. Verfahren nach Anspruch 2, **dadurch gekennzeichnet, dass** die geräuschregistrierende Vorrichtung die erzeugten Geräuschsignale kontinuierlich registriert.

4. Verfahren nach Anspruch 2, **dadurch gekennzeichnet, dass** die geräuschregistrierende Vorrichtung die an der Oberfläche, die gereinigt wird, gebildeten Geräuschsignale in bestimmten Zeitintervallen registriert.

5. Verfahren nach den Ansprüche 2, 3 oder 4, **dadurch gekennzeichnet, dass** das Vergleichsverfahren bei Signalen durchgeführt wird, die durch ein bestimmtes Zeitintervall getrennt sind.

## Revendications

1. Dispositif de nettoyage automatique effectuant un ensemble de mouvements préalablement enregistré lors du nettoyage de stalles pour animaux, ledit dispositif de nettoyage étant équipé d'un dispositif d'arrêt contrôlé par le son comprenant un dispositif d'enregistrement du son conçu pour enregistrer des signaux générés au niveau de la surface nettoyée, un moyen de stockage pour stocker lesdits signaux et un moyen permettant d'effectuer un processus de comparaison entre lesdits signaux stockés et des données stockées préalablement qui représentent une valeur seuil pour des signaux générés par une surface ayant le degré de propreté souhaité.

2. Processus dans lequel un processus de comparaison est utilisé pour l'arrêt automatique d'un dispositif de nettoyage automatique qui effectue un ensemble de mouvements préalablement enregistré lors du nettoyage de stalles pour animaux, ledit processus étant **caractérisé par** l'enregistrement, par un dispositif d'enregistrement du son, de signaux sonores générés au niveau de la surface nettoyée, lesdits signaux étant stockés dans un moyen de stockage et un processus de comparaison étant effectué entre lesdits signaux sonores stockés et une valeur seuil prédéterminée, ledit dispositif de nettoyage étant arrêté lorsque le résultat dudit processus de comparaison indique que ledit signal sonore correspond à ladite valeur seuil.

3. Processus selon la revendication 2, **caractérisé en ce que** le dispositif d'enregistrement du son enregistre les signaux sonores générés de manière continuelle.

4. Processus selon la revendication 2, **caractérisé en ce que** le dispositif d'enregistrement du son enregistre les signaux sonores générés au niveau de la surface nettoyée à des intervalles de temps prédéterminés.

5. Processus selon la revendication 2, 3 ou 4, **caractérisé en ce que** le processus de comparaison est effectué sur des signaux qui sont séparés par un intervalle de temps prédéterminé.
